# EUROPÄISCHE PATENTANMELDUNG

(11) **EP 1 820 557 A2**
(43) Veröffentlichungstag der Anmeldung: **22.08.2007**
(21) Anmeldenummer: 07003179.4
(22) Anmeldetag: 15.02.2007
(51) Int. Cl.: B01D 46/12, B01D 53/04

(54) **Adsorberfilter zum Filtern von luftgetragenen molekularen Verunreinigungen**

(30) Priorität: 21.02.2006 DE 102006008884
(71) Anmelder: M+W Zander Holding AG, 70499 Stuttgart (DE)
(72) Erfinder: De Oliveira, Ralph Fernandes, 71384 Weinstadt (DE)
(74) Vertreter: Bertram, Helmut

(57) **Zusammenfassung**

Bei einem Adsorberfilter zum Filtern von luftgetragenen molekularen Verunreinigungen besteht die Aufgabe, abwechselnd einen Adsorptions- und einen Desorptionsbetrieb zu gewährleisten, ohne dass sich die zur Regeneration erforderlichen hohen Temperaturen negativ auf die zu erzeugende Reinluft auswirken.

Filterelemente mit einem Filterrahmen, der einen Innenraum begrenzt, von dem zwei gegenüberliegende Seitenwände von einem flächigen Adsorbermedium gebildet sind und der nach einer weiteren Seite hin offen gelassen ist, sind mit den durch die Adsorbermedien verschlossenen Seitenflächen aneinander liegend zu einem festen Verbund zusammengefügt, wobei die weiteren offen gelassenen Seiten abwechselnd als Unter- und als Oberseiten vorgesehen sind.

## Beschreibung

Die Erfindung bezieht sich auf einen Adsorberfilter zum Filtern von luftgetragenen molekularen Verunreinigungen mit einer Mehrzahl adsorbierender Filterelemente.

An die Prozessluftversorgung bei der Wafer- und Maskenherstellung werden immer höhere Anforderungen gestellt, da die Prozesse innerhalb der Produktionseinrichtungen zunehmend sensibel auf Kontaminationen mit Spurengasen reagieren. Hierbei handelt es sich typischerweise um organische Verbindungen (VOC's), sowie Säuren (SO₂, H₂S, HF) und Basen (NH₃, NMP, Amine). Filtersysteme, die den Produktionseinrichtungen bei der Prozessluftversorgung vorangestellt sind, sorgen dafür, dass die luftgetragenen molekularen Verunreinigungen (AMC: Airborne Molecular Contamination) die Produktionseinrichtungen nicht erreichen bzw. dass Schadstoffmenge (AMC-Level) und Zusammensetzung der Spurengase vorgegebene Grenzwerte nicht überschreiten.

Von besonderem wirtschaftlichen Interesse sind insbesondere Filtersysteme mit kontinuierlichem Filterbetrieb, in den eine zyklische Adsorberregenerierung eingebunden ist.

In der DE 41 04 513 C2 wird unter anderem deshalb ein Adsorber aus elektrisch leitfähigem, adsorbierendem Material in Form von Rohren, Hohlfasern oder Matten, bestehend aus gepresster oder faserförmiger Aktivkohle vorgeschlagen. Da die von lösungsmittelbeladener Luft in Längsrichtung durchströmten Aktivkohle-Kapillaren mittels eines leitfähigen Klebers mit einem als Elektrode dienenden Metallring verbunden sind, besteht der Nachteil, dass aufgrund der hohen Temperaturen im Regenerationsprozess Ausgasungen des verwendeten Klebers zu unvertretbar hohen Verunreinigen der zu erzeugenden Reinluft führen können.

Auch andere, aus der Kraftfahrzeugtechnik bekannte Luftfiltereinrichtungen lösen das Abdichtproblem zwischen Filterelement und Rahmen nicht in einer Weise, die für den kontinuierlichen Filterbetrieb mit zyklischer Adsorberregenerierung geeignet wären, da sie ebenfalls Dichtmaterialien, wie etwa aufgeschäumten elastischen Kunststoff oder gemäß der DE 38 39 352 C2 aushärtendes Material verwenden, das eine den Rand des Filterkörpers einfassende Verbindung bildet, indem es bis zu einer vorgegebenen Tiefe in den Rand des Filterkörpers eindringt.

Aufgabe der Erfindung ist es deshalb, abwechselnd einen Adsorptions- und einen Desorptionsbetrieb zu gewährleisten, ohne dass sich die zur Regeneration erforderlichen hohen Temperaturen negativ auf die zu erzeugende Reinluft auswirken.

Diese Aufgabe wird bei einem Adsorberfilter zum Filtern von luftgetragenen molekularen Verunreinigungen der eingangs genannten Art dadurch gelöst, dass
- der Adsorberfilter erste und zweite Filterelemente einschließt, von denen
- die ersten Filterelemente als Träger für ein Adsorbermedium einen Filterrahmen aufweisen, der einen Innenraum begrenzt, von dem zwei gegenüberliegende Seitenwände von dem Adsorbermedium gebildet sind und der nach einer weiteren Seite hin offen gelassen ist, und
- die zweiten Filterelemente Filterrahmen enthalten, die denen der ersten Filterelemente gleichen und bei denen von zwei gegenüberliegenden Seitenwänden des Innenraumes eine Seitenwand von dem Adsorbermedium und die andere Seitenwand mit luftundurchlässigem Material verschlossen ist, und dass
- die ersten und zweiten Filterelemente mit den durch die Adsorbermedien verschlossenen Seitenflächen aneinander liegend zu einem festen Verbund zusammengefügt sind, bei dem die weiteren offen gelassenen Seiten abwechselnd als Unter- und als Oberseiten vorgesehen sind, wobei die luftundurchlässig verschlossenen Seitenwände zweier zweiter Filterelemente den Verbund nach außen abschließen.

Wesentlich für die Erfindung ist, dass das Adsorbermedium zugleich als dichtendes Element fungiert.

Da das Adsorbermedium vorteilhaft mechanisch auf einem abgewinkelten Teil des Filterrahmens befestigt ist, kann auf ausgasungskritische Dichtstoffe und Klebemassen verzichtet werden. Leckagen und Kurzschlüsse lassen sich zuverlässig verhindern.

Der feste Verbund zwischen den Filterrahmen kann in vorteilhafter Ausgestaltung durch Spannelemente hergestellt sein, die mindestens in Eckbereichen der Filterrahmen angreifen.

Als Adsorbermedium eignet sich gepresste oder faserförmige Aktivkohle, die zu einem Gewebe oder einem Vlies verarbeitet sein kann.

Die Erfindung stellt einen großflächigen Adsorberfilter zur Verfügung, indem mittels plattenförmiger Filterelemente vorteilhaft mehrere gleichzeitig parallel durchströmbare Kammern gebildet werden, in welche der z. B. über die Öffnungen in der Oberseite einströmende Gasstrom zunächst parallel gerichtet zu den Seitenwänden aus Adsorbermaterial strömt. Da die Unterseiten dieser Kammern verschlossen sind, wird der zu reinigende Gasstrom gezwungen, seitlich durch das Adsorbermaterial hindurchzutreten, um den Adsorber über die Öffnungen in der jeweils benachbarten Kammer verlassen zu können.

Der in entgegengesetzten Richtungen durchströmbare erfindungsgemäße Adsorberfilter eignet sich besonders vorteilhaft zur Regenerierung, wenn er z. B. über die Öffnungen in der Unterseite mit einem heißen Regenerationgasstrom durchsetzt wird.
Über geeignete Luftklappensysteme kann eine hierfür erforderliche Umschaltung der Gasströme vorgenommen werden.

Die Erfindung soll nachstehend anhand der schematischen Zeichnung näher erläutert werden. Es zeigen:
Fig. 1 ein plattenförmiges Filterelement
Fig. 2 einen erfindungsgemäßen Adsorberfilter

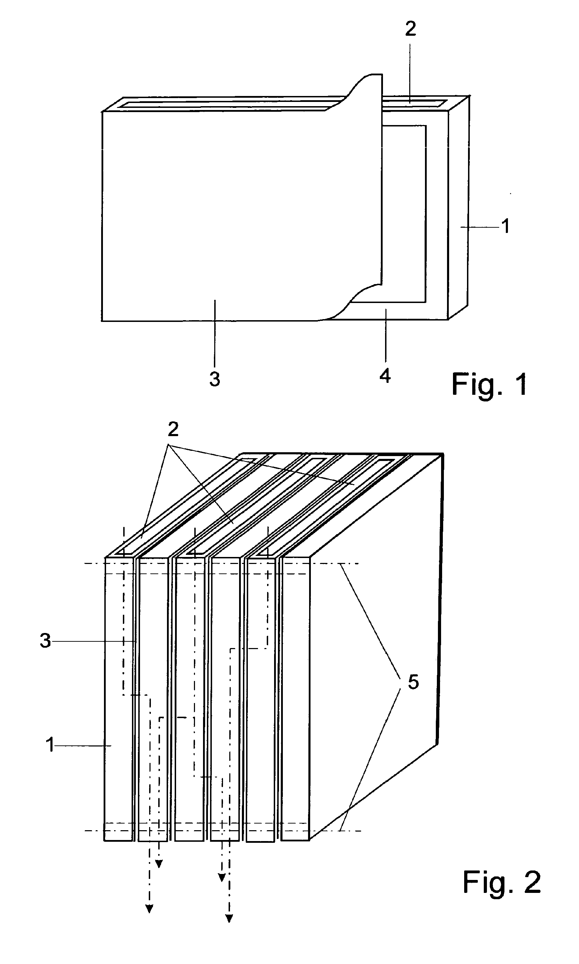

Das in Fig. 1 dargestellte plattenförmige Filterelement besteht aus einem gewinkelten metallischen Filterrahmen 1, in den in ein stirnseitiges Rahmenteil eine Öffnung 2 eingearbeitet ist. Ein von dem Filterrahmen 1 begrenzter Innenraum wird an zwei sich gegenüberliegenden Seiten durch flächig ausgebildetes Adsorbermaterial 3 verschlossen, das bevorzugt zu einem Gewebe oder einem Vlies aus Aktivkohle verarbeitet ist. Dadurch ist das Adsorbermaterial 3 besonders gut geeignet, um es auf einen abgewinkelten Teil 4 des Filterrahmens aufzulegen und anschließend mechanisch fest anliegend daran zu befestigen, was in Fig. 1 durch den noch nicht vollständig abgeschlossenen Befestigungsvorgang dargestellt ist. Dadurch, dass keine Klebe- und Dichtungsmittel verwendet werden, kann das bei den bekannten Lösungen auftretende Ausgasen, insbesondere bei den für eine Desorption erforderlichen hohen Temperaturen von ca. 200 °C vermieden werden.

Die Filterelemente gemäß Fig. 1 sind dafür vorgesehen, mit den durch das Adsorbermaterial 3 verschlossenen Seitenflächen aneinander liegend zu einem festen Verbund zusammengefügt zu werden, um dadurch einen Adsorberfilter gemäß Fig. 2 zu bilden. Der feste Verbund kann z. B. durch Spannelemente hergestellt werden, die entlang von mindestens in den Eckbereichen durch die Filterelemente hindurch verlaufenden Spannachsen 5 wirken.

Die Filterrahmen sind derart angeordnet, dass die stirnseitigen Rahmenteile mit den Öffnungen 2 abwechselnd oben und unten liegen, so dass ein über die oben liegenden Öffnungen 2 eintretender und zu reinigender Gasstrom entlang des durch Strich-Punkt-Linien markierten Weges in den Innenraum gelangt, das Adsorbermaterial 3 durchsetzt und anschließend über den Innenraum eines benachbarten Filterelementes den Adsorberfilter durch eine Bodenöffnung verlässt.
In umgekehrter Richtung, d. h. über eine Bodenöffnung eintretend, kann eine heißer Regenerationsgasstrom durch das Adsorbermaterial 2 hindurchgeleitet werden, um das Adsorbermaterial 2 z. B. zyklisch zu regenerieren.

## Patentansprüche

1. Adsorberfilter zum Filtern von luftgetragenen molekularen Verunreinigungen mit einer Mehrzahl adsorbierender Filterelemente, **dadurch gekennzeichnet, dass**
- der Adsorberfilter erste und zweite Filterelemente einschließt, von denen
- die ersten Filterelemente als Träger für ein Adsorbermedium (3) einen Filterrahmen (1) aufweisen, der einen Innenraum begrenzt, von dem zwei gegenüberliegende Seitenwände von dem Adsorbermedium (3) gebildet sind und der nach einer weiteren Seite hin offen gelassen ist, und
- die zweiten Filterelemente Filterrahmen (1) enthalten, die denen der ersten Filterelemente gleichen und bei denen von zwei gegenüberliegenden Seitenwänden des Innenraumes eine Seitenwand von dem Adsorbermedium (3) und die andere Seitenwand mit luftundurchlässigem Material verschlossen ist, und dass
- die ersten und zweiten Filterelemente mit den durch die Adsorbermedien verschlossenen Seitenflächen aneinander liegend zu einem festen Verbund zusammengefügt sind, bei dem die weiteren offen gelassenen Seiten abwechselnd als Unter- und als Oberseiten vorgesehen sind, wobei die luftundurchlässig verschlossenen Seitenwände zweier zweiter Filterelemente den Verbund nach außen abschließen.

2. Adsorberfilter nach Anspruch 1, **dadurch gekennzeichnet, dass** das Adsorbermedium (3) mechanisch und ohne Verwendung von Dichtungsmaterialien auf einem abgewinkelten Teil (4) des Filterrahmens (1) befestigt ist.

3. Adsorberfilter nach Anspruch 2, **dadurch gekennzeichnet, dass** der feste Verbund zwischen den Filterrahmen (1) durch Spannelemente hergestellt ist, die mindestens in Eckbereichen der Filterrahmen angreifen.

4. Adsorberfilter nach einem der Ansprüche 1 bis 3, **dadurch gekennzeichnet, dass** das Adsorbermedium (3) aus gepresster oder faserförmiger Aktivkohle besteht.

5. Adsorberfilter nach einem der Ansprüche 1 bis 3, **dadurch gekennzeichnet, dass** das Adsorbermedium (3) als Gewebe oder Vlies aus Aktivkohlefasern ausgebildet ist.
